# EUROPEAN PATENT APPLICATION

(11) **EP 2 570 923 A1**
(43) Date of publication of application: **20.03.2013**
(21) Application number: 11306148.5
(22) Date of filing: 14.09.2011
(51) Int. Cl.: G06F 9/50

(54) **Kiosk system for providing information and services**

(71) Applicant: Alcatel Lucent, 75007 Paris (FR)
(72) Inventor: Parladori, Giorgio, 20129 MILANO (IT); Donadio, Pasquale, 80127 NAPOLI (IT)
(74) Representative: Colombo, Stefano Paolo

(57) **Abstract**

The invention relates to a kiosk system comprising: a first kiosk and a second kiosk; a first device connected to said first kiosk and a second device connected to said second kiosk; a kiosk manager configured to manage said first and second kiosks; and a network connection between said kiosk manager and said first and second kiosks, wherein each of said first and second kiosks comprises a virtual layer comprising characteristics which are representative of the device connected thereto; and said kiosk manager is configured to connect said first and second kiosks as a function of said representative characteristics, thereby forming a kiosk sub-network.

## Description

### FIELD OF THE APPLICATION

The present invention relates to a kiosk system. In particular, the invention relates to a kiosk system for providing information and services and to a kiosk configured for forming such a kiosk system.

### PRIOR ART

As it is well known in the art, a multimedia kiosk device is a communication tool which is configured for providing information, advertising and/or several interactive services. Such a device will be also simply referred to as a "kiosk device" or "kiosk".

Kiosk devices are standalone devices which are currently installed in cities, towns and public areas and they permit to access information and/or services in a static manner. In other words, such kiosks allow for managing specific and fixed information without permitting any further configuration.

There can be found, as example, kiosks in libraries, provided with information on the location or data of books in the library, kiosks in train stations provided with leaving hours and characteristics of trains, kiosks for maps provided with information on streets and buildings.

The main drawback of such kiosks is that they are very limited in functionalities.

Each kiosk is a standalone system with a standard set of hardware components. Presently, each kiosk is designed for providing standard services and/or standard information.

More, kiosks may be simply connected to the Internet via standard channels.

### SUMMARY OF THE INVENTION

The Applicant has faced the problem of providing a kiosk system which is improved in terms of flexibility in managing information and physical resources to overcome the drawbacks of the above state of the art.

The technical problem is solved, according to claim 1, by a kiosk system comprising:
o a first kiosk and a second kiosk;
o a first device connected to said first kiosk and a second device connected to said second kiosk;
o a kiosk manager configured to manage said first and second kiosks; and
o a network connection between said kiosk manager and said first and second kiosks,
   wherein
o each of said first and second kiosks comprises a virtual layer comprising characteristics which are representative of the device connected thereto; and
o said kiosk manager is configured to connect said first and second kiosks as a function of said representative characteristics, thereby forming a kiosk sub-network.

The kiosk manager may comprise:
o an interface layer for the configuration of every single kiosk and of the kiosks operating in the network;
o a service layer for converting requests in the activation of services consistent with the features of each kiosks;
o a network layer for converting kiosks configuration requests in suitable data packets for the management of every single kiosk.

In embodiments of the invention, said kiosk manager comprises a discovery manager configured to detect said characteristics which are representative of the device connected to said kiosk.

In embodiments of the invention, said kiosk manager comprises a configuration manager configured to configure said at least one kiosk in said sub-network.

In embodiments of the invention, said configuration manager comprises one or more of:
o a first configuration module configured to create a kiosk;
o a second configuration module configured to modify physic infrastructures of said kiosk;
o a third configuration module configured to load and/or start a kiosk;
o a fourth configuration module configured to duplicate a kiosk; and o a fifth configuration module configured to eliminate a kiosk.

In embodiments of the invention, said kiosk manager comprises a service orchestrator manager configured to design, specify and orchestrate the deployment of advanced services suitable on the virtual kiosks network, in order to dynamically distribute the computational resources into the virtual kiosk sub- network.

In embodiments of the invention, said kiosk manager comprises a help manager configured to monitor for connectivity problems and to handle trouble tickets System.

In embodiments of the invention, said kiosk manager is configured to be distributed on one or more kiosks.

In embodiments of the invention, said devices comprise multimedia devices and/or sensors devices.

In embodiments of the invention, said devices are connected to said kiosks by means of one or more of a cable connection, and a wireless connection.

In embodiments of the invention, said devices comprise one or more among: Wireless access point; Cameras; interactive terminal; NFC device(s); Pressure and/or temperature sensors; multi-core Processing units; storage; localization; network connections (multilayer); display, possibly high resolution display.

In embodiments of the invention, said kiosk comprises an application layer representing a set of functionalities exposed to a final user, provided by said physical device represented by said characteristics.

According to a further aspect, the present invention provides a kiosk connected to at least one device in a network, the kiosk comprising:
o an application layer representing a set of functionalities exposed to a final user, provided by said device represented by said characteristics;
o a virtual layer comprising characteristics which are representative of the device connected thereto; and
o a network layer configured for connecting the kiosk to a computational grid, representing a platform sharing coordinated resource/devices, and a problem solving system in dynamic, multi-dimensional kiosks sub-network as a function of said characteristics which are representative of the device connected to the kiosk.

By providing a kiosk manager for managing the forming of kiosks sub-networks, the information and services provided by the kiosks can be easily composed to implement a huge variety of applications.

The invention will be explained more in detail in the description provided below and with the help of indicative and not limiting embodiments related to the annexed drawings.

### BRIEF DESCRIPTION OF THE DRAWINGS

- Fig. 1: schematically shows a kiosk system according to an embodiment of the present invention;
- Fig. 2: shows a further representation of the kiosk system of Fig. 1;
- Fig. 2a: shows details of Fig. 2, i.e a kiosk manager connected to a kiosk;
- Fig. 3: shows the kiosk system of Fig. 1 in a first operative condition i.e discovery devices and response thereof;
- Figs 4a to 4d: show the kiosk system of Fig. 1 in further operative conditions i.e create, modify, duplicate, destroy kiosks;
- Fig. 5: shows schematically the software and hardware architecture of a kiosk according to embodiments of the invention; and
- Fig.6: shows schematically the software and hardware architecture of a kiosk according to an embodiment of the invention.

### DETAILED DESCRIPTION

Presently, a kiosk device is mainly composed by the following parts: an I/O unit, a local processor that manages the content shown by the kiosk device and a standard communication unit for uploading and downloading from the Internet.

The kiosk device according to embodiments of the present invention (briefly referred to as "kiosk" in the description) is a multimedia kiosk and a strategic tool to deliver innovative services and enable a rapid and targeted dissemination of information, reducing advertising costs through the promotion selected in place of mass campaigns.

Extremely versatile, effective and of easy consultation the kiosk of the invention can be positioned at strategic locations in high traffic public, allowing ease of access to a wealth of information, news, images and sounds.

According to embodiments of the invention, a kiosk system comprises a plurality of kiosks, wherein said kiosks are connected together and form a network. According to a basic configuration, there is provided a first kiosk device and a second kiosk device. A first device may be connected to said first kiosk and a second device may be connected to the second kiosk. The system may comprise also a kiosk manager configured for the management of the kiosks.

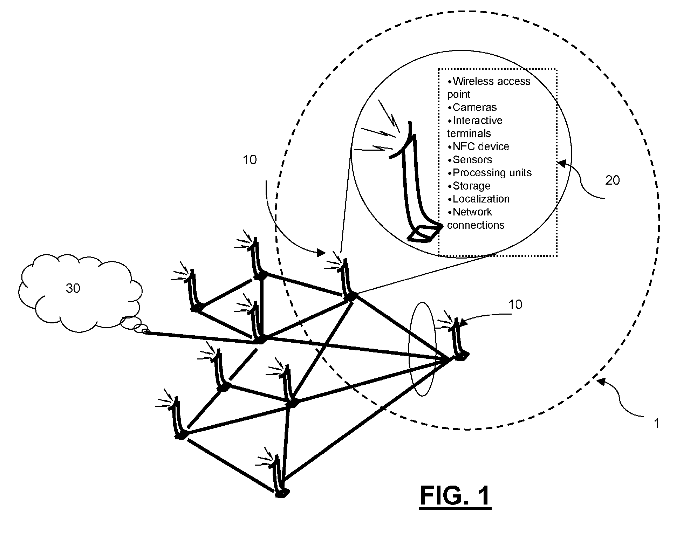

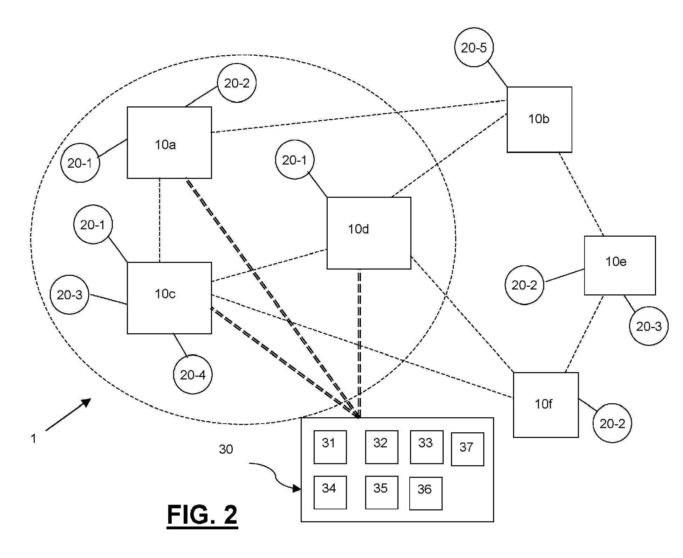

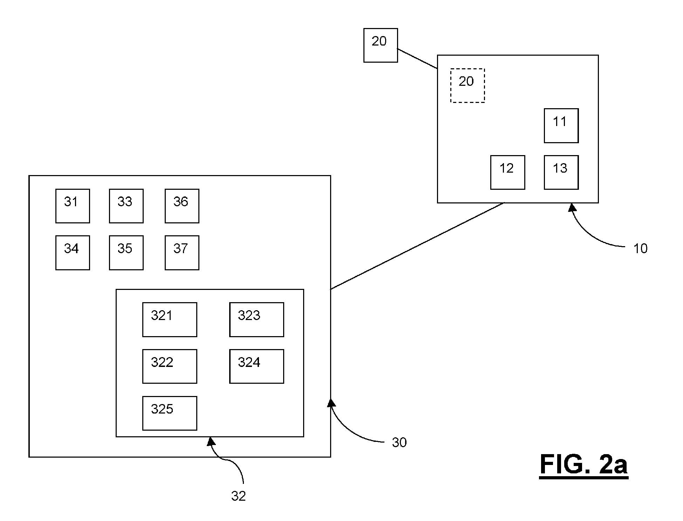

According to embodiments of the present invention, as shown in Figures 1 and 2, a kiosk system is provided comprising a plurality of kiosks, including one first kiosk and one second kiosk. The kiosks are generally indicated by reference number 10 and by a letter. In Figure 2, six kiosks 10a, 10b, ..., 10f are shown as an example. In some cases, a generic kiosk will be referred to as kiosk 10 (as in Figure 1) without any following letter.

Each kiosk 10 is provided with one or more devices 20 (Figure 2). In a basic configuration, each kiosk is provided with a single device. However, typically, a kiosk may be provided with more than one device. The devices are indicated in the drawings by reference number 20 and by a further number, the two numbers being separated by symbol "-". For instance, kiosk 10a is provided with two devices 20-1 and 20-2 connected thereto; kiosk 10c is provided with three devices 20-1, 20-3, 20-4. In some cases, a generic device will be referred to as "device 20" without any following additional number.

The device 20 may be a multimedia device (for instance a wireless access point), a sensor device (of either pollution, temperature, pressure, or any other sensor device), a detector (of either pollution, temperature, pressure, or any other detector device), a device for acquiring discrete images (still camera) or a sequence of images (video camera), an interactive terminal, a processing unit, a data storage device, a localization device, a NFC (Near Field Communications) device, or the like. The device 20 will be also referred to as "physical device". It has to be understood that the above list is not exhaustive and other devices can be added according to the tool and/or service to be carried out.

The devices 20 constitute a physical layer of the kiosk.

The devices 20 may be connected to the kiosks 10 by means of a wired connection. In other embodiments, the devices 20 may be connected to the kiosks 10 by means of a wireless connection. It should be understood that the continuous line connecting a device to a kiosk is not representing necessarily a cable line but it also includes any other form of connection.

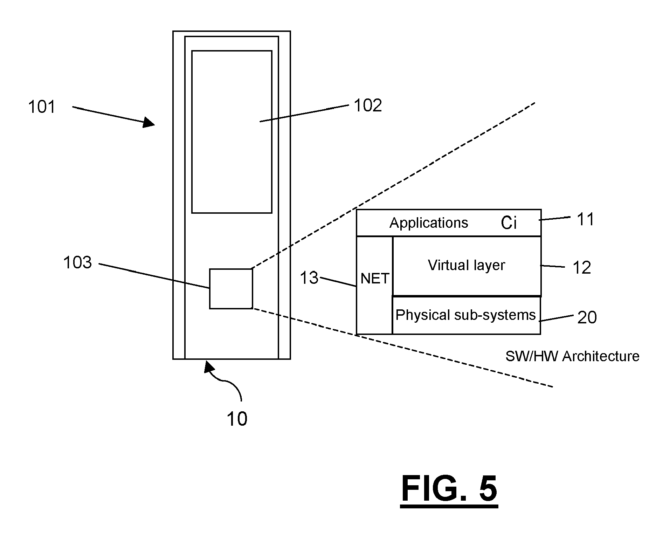

With reference to Figure 5, according to embodiments of the invention, each of the kiosks 10 comprises some hardware and some software.

Hardware preferably includes a housing 101, a monitor 102, a keybord 103 or the like and a processor (not shown). A touch screen monitor could be provided in addition or in replacement of keybord 103.

Software includes a virtual layer 11 comprising characteristics Ci which are representative of the device(s) 20 connected thereto.

In other words, the virtual layer 11 is in charge to expose the physical devices 20 as "virtualized resources". In this way, according to the user needs, each kiosk can be composed by connecting together any of a subset of physical devices or a full set of physical devices.

Preferably, according to the invention, each kiosk 10 comprises also an application layer 12 representing a set of functionalities exposed to a final user, provided by the physical device(s) 20 which in turn is/are represented by the characteristics Ci.

Additionally, the kiosk 10 may also comprise a network layer 13. Network layer 13 is configured for connecting the kiosk 10 to a computational grid, representing a platform sharing coordinated resources and/or devices 20, and a problem solving system in dynamic, multi-dimensional kiosks sub-network 1 as a function of the characteristics Ci which are representative of the device 20 connected to the kiosk 10.

In other words, each kiosk 10 is connected to the computational grid, namely a reference platform for combining flexibility of deploying large-scale and resource intensive applications.

In this respect, according to the invention the kiosk system comprises a kiosk manager 30 (Figures 1 and 2) configured to manage a number of kiosks 10.

In general, the kiosk manager 30 carries out a system for management of the kiosks 10.

The kiosk manager 30 is a software based system implementing functions of discovery, configuration, orchestrator and help Desk for kiosk (as specified in detail in the rest of the specification), and it is implemented by three software layers (Fig.2 and 2a):
● a interface layer 35, namely the interface towards the operator, for the configuration of every single kiosk and/or the network of the working kiosks; preferably the interface layer is a graphical interface layer.
● a service layer 36 for converting requests received by an operator into activation of services consistent with the features of each kiosks;
● a network layer 37 for converting kiosks configuration requests in suitable data packets consistent with protocols for managing kiosks (es. SNMP or the like).

According to embodiments of the invention, the kiosk manager 30 and the kiosks 10 are connected in a network.

According to embodiments of the invention, the kiosk manager 30 is configured to be distributed on several kiosks in order to maximise the fault tolerance and the computational resources available on the network.

As an alternative the kiosk manager 30 is configured to be implemented on a single machine.

More in generally, it has to be understood that the kiosk manager 30 is configured to manage a number of kiosks 10 of the network depending on the application and the service to be provided.

In other words, the kiosk manager 30 manages the computation and storage resources and is in charge to orchestrate all the kiosks 10 located in a well defined domain network 1 or sub-network 1.

The kiosk manager 30 is configured for managing new kiosks 10 daily, weekly and at certain times, and manages the programming of each individual group of kiosks 10.

It can also personalize the content of the kiosks 10 according to the different sub-network 1 or for a single kiosk 10.

Sub-network 1 may comprise kiosks 10 all having the same type of device. For instance, sub-network 1 may comprise a number of kiosks provided with a video camera and a pressure sensor.

The kiosk manager 30 is provided to manage the cloud/grid/sub-network 1 of virtualized resources/devices 20, including infrastructure composition, partitioning, application design and download.

According to embodiments of the invention, the kiosk manager 30 is configured to connect the first and second kiosks 10 as a function of the representative characteristics Ci of every kiosks, thereby forming a kiosk sub-network 1.

In other words, the kiosk manager 30 selects in the network the only kiosks 10 considered to be elected to carry out specific functionalities in specific applications, depending on characteristics Ci of the said kiosks 10.

For this purpose, according to the invention, the kiosk manager 30 comprises a discovery manager 31 (Figures 2 and 2a).

The discovery manager 31 is configured to detect characteristics Ci which are representative of the devices 20 connected to any kiosks 10.

In other words, the discovery manager 31 detects the applications and devices 20 used in the kiosk 10 automatically.

It collects information about one or more among the properties, the current configuration and the status of devices 20.

Preferably, the status comprises performance and error statistics.

Finally, it correlates and evaluates all gathered information and supplies the data for the representation of the connection between different physical units (e.g. storage).

According to the invention, the kiosk manager 30 comprises a configuration manager 32 (Figures 2 and 2a).

The configuration manager 32 is adapted to configure the kiosks 10 in the sub-network 1.

According to the invention, the configuration manager 32 comprises a first configuration module 321 configured to create a kiosk 10.

According to the invention, the configuration manager 32 comprises a second configuration module 322 configured to modify physical infrastructures of said kiosk 10.

According to embodiments of the invention, the configuration manager 32 comprises a third configuration module 323 configured to load and/or start a kiosk 10.

According to the invention, the configuration manager 32 comprises a fourth configuration module 324 configured to duplicate a kiosk 10.

According to the invention, the configuration manager 32 comprises a fifth configuration module 325 configured to destroy a kiosk 10.

In other words, the configuration manager 32 significantly simplifies the configuration of all components of the sub-network 1

As already explained, basic primitives of the configuration service are:
● Create virtual kiosk, that permits to create a new virtual kiosk, starting by the definition of the hardware subsystem.
● Configure virtual kiosk, that allows to modify the physical infrastructure of the kiosk
● Load virtual kiosk, that starts the virtual kiosk
● Duplicate kiosk, that permits to duplicate and move a virtual kiosk in a new location
● Destroy kiosk, that allows to cancel the virtual kiosk instance According to the invention, the kiosk manager 30 comprises a service orchestrator manager 33 (Figures 2 and 2a) configured to design, specify and orchestrate the deployment of advanced services suitable on the virtual kiosk infrastructure.

In other words, as an example, the orchestrator manager 33 orchestrates networking and storage services taking into account the strategic aspects of the multimedia contents associated to the kiosks 10.

After the configuration phase carried out by the the configuration manager 32, the orchestrator manager 33 provides a change in the context of the kiosks 10.

In other words, the orchestrator manager 33 makes a kiosk 10 to change its context from configuration to resources/devices 20 metering and monitoring in the kiosk network.

In this way, the orchestrator manager 33 has all the information to dinamically re-distribute the computational resources among the kiosks in the network.

The re-distribution is carried out as a function of the resources needed by each kiosk 10.

According to embodiments of the invention, the kiosk manager 30 comprises a help manager 34 (Figures 2 and 2a) configured to monitor for connectivity problems and to handle a trouble ticket system.

From the above description it will be understood the functioning of the kiosk system in terms of configuration and execution of kiosks 10.

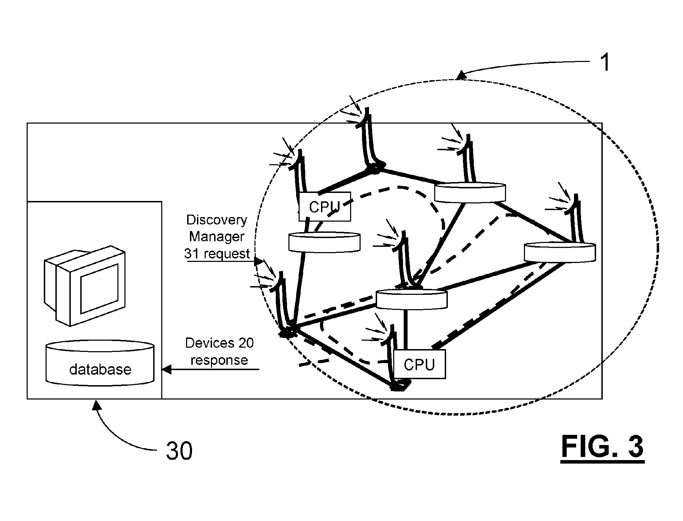

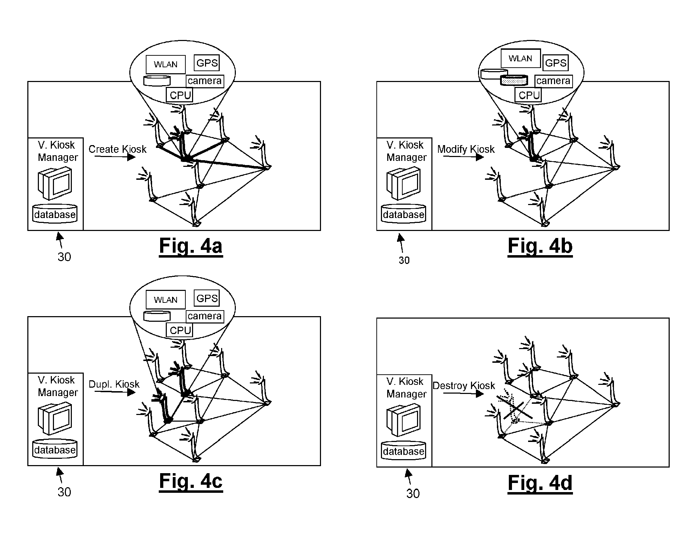

One application is herebelow described as a way of example with reference to figures 3 and 4a to 4d.

The figures show the service discovery, carried out by the discovery manager 31, the configuration, carried out by the configuration manager 32, and the orchestration of a virtualized kiosk 10 connected to a computational sub-network/grid, carried out by the orchestrator manager 33.

With reference to Fig. 3, the system starts in configuration mode: the kiosk manager 30, specifically its discovery manager 31, explores its own virtual kiosk domain collecting information about the properties/characteristics Ci, the current configuration and the status of physical devices 20 connected to the virtual kiosk grid. Information about devices 20 are stored locally as characteristics Ci.

With reference to Figures 4a to 4d, the kiosks manager 30, specifically the configuration manager 32, on the basis of the information coming from the field, creates, destroys, configures, loads, and duplicates the virtual kiosks 10 inside its virtual kiosk domain/sub-network 1:
With reference to Fig. 4a, when a new kiosk 10 is needed, the virtual kiosk 10 is created aggregating available physical resources/devices 20. As example the virtual kiosk 10 should be composed of one or more among one (multi-core) processing units, one storage unit, one wireless access point, two cameras and one localization system.
With reference to Fig. 4b, when a new configuration of the existing kiosk 10 is needed, the virtual kiosk 10 is firstly stopped and then edited, in order to modify the physical infrastructure (e.g. new storage space is needed). To complete the procedure the virtual kiosk 10 is finally re-loaded.
With reference to Fig. 4c, when a copy of a virtual kiosk 10 is needed, it is possible to duplicate a virtual kiosk 10 from a well defined location, into a new location in order to preserve the overall characteristics of the old one.
With reference to Fig. 4d when a virtual kiosk 10 is not yet needed, the virtual infrastructure should be deleted in an easy way.

Virtual kiosk management application finishes and changes states from provisioning to resource metering and monitoring.

At this point, the orchestrator manager 33 starts to work in order to dynamically distribute in the best way the computational resources into the working network as a function of the resources needed by each working kiosk 10.

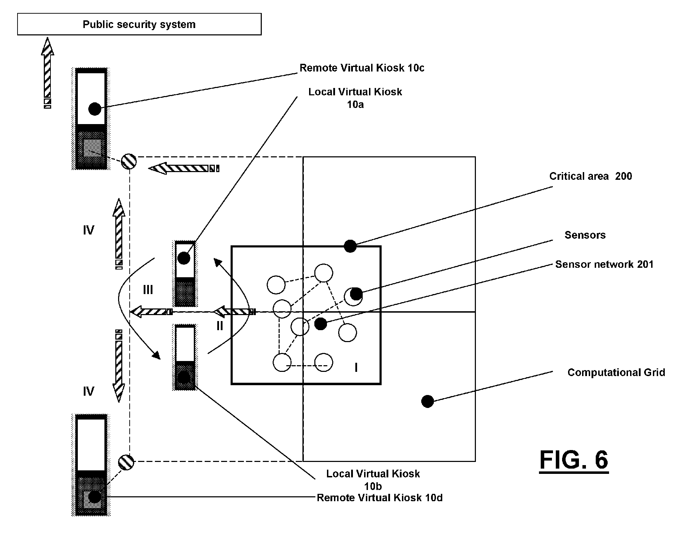

A practical example of self-configuration and execution of the kiosk system of the invention is herebelow described with reference to a hydro-geological disaster (fig. 6).

A critical area 200 is defined as a potential hydro geological disaster area. A well defined sensor network 201 comprising a plurality of devices 20, specifically sensors, is positioned inside the critical area 200 in order to continuously monitor characteristic parameters (Ci) of the critical area (e.g water level of a river) (phase I).

The sensor network 201 wireless informs (periodically) corresponding local kiosks 10a, 10b present in the area where a potential hydro-geological disaster could happen (phase II).

Data are analyzed continuously by local virtual kiosks (3). When the hydro-geological disaster is taking place, the kiosk manager 30 organizes local virtual kiosks in order to:
● Select the potential remote virtual kiosk 10c, 10d set in charge to communicate with the public security system in the better way;
● Assign the maximum resource set in charge to maximize machine to machine communication between kiosks (e.g. maximize the bandwidth; the storage system in order to contain maximum set of history data related to the monitored disaster, and so on...)
● Select the actions needed to minimize damage due to the hydro geological disaster;
● Sends (in real-time) the whole set of information useful (e.g. level of warning, actions needed) to the remote virtual kiosks 10c, 10d in order to advertise the public security system (phase IV).

The local kiosks cooperate and self-organize themselves, by means of the kiosk manager 30, in adaptive way, in response to a well defined level of warning coming from the field. Local virtualized kiosks 10a,10b select and then inform, via machine to machine communication, other potential virtual kiosks 10c, 10d of the same or adjacent areasthereby forming a virtual kiosk sub-network 1.

In other words the kiosks 10 cooperate, and organize themselves for transmitting the warning for the disaster.

Information about the hydro geological disaster are carried out in real-time to the virtual kiosks of a public security system.

It has to be understood the high potential of the kiosk system of the invention with the machine to machine (M2M) communication environment proposed, in broadcasting route information following a hydro geological disaster and/or other disasters detectable by the devices connected to the kiosks.

With the present invention the following advantages are reached:
● easy implementing of open and distributed service and functionalities offered by virtualization, cloud infrastructures and Machine to Machine (M2M) communication paradigms;
● build, in a easy way, HW/SW architecture of a kiosk system that can expose a variety of virtual resources towards a meshed network connecting the kiosk devices with additional processing and storage resources connectable to the grid;
● dynamical distribution of the computational resources into the working network; easy use in new challenging applications. The availability of distributed sensors allows, for example, for innovative security applications.
● Applications of the virtual kiosk are dynamic and pluggable, in the sense that they are updated automatically taking in account the user preferences and the context.

## Claims

1. A kiosk system comprising:
o a first kiosk (10a) and a second kiosk (10c, 10d);
o a first device (20-1, 20-2) connected to said first kiosk (10a) and a second device (20-1, 20-3, 20-4; 20-1) connected to said second kiosk (10c, 10d);
o a kiosk manager (30) configured to manage said first and second kiosks (10a; 10c, 10d); and
o a network connection (100) between said kiosk manager (30) and said first and second kiosks (10a; 10c, 10d),
wherein
o each of said first and second kiosks (10a; 10c, 10d) comprises a virtual layer (11) comprising characteristics (Ci) which are representative of the device (20) connected thereto; and
o said kiosk manager (30) is configured to connect said first and second kiosks (10) as a function of said representative characteristics (Ci), thereby forming a kiosk sub-network (1).

2. A kiosk system according to claim 1 wherein the kiosk manager (30) comprises:
o an interface layer (35) for the configuration of every single kiosk (10) and of the kiosks (10a; 10c, 10d)operating in the network;
o a service layer (36) for converting requests in the activation of services consistent with the features of each kiosks;
o a network layer (37) for converting kiosks configuration requests in suitable data packets for the management of every single kiosk (10a; 10c, 10d).

3. The kiosk system according to claim 1 wherein said kiosk manager (30) comprises a discovery manager (31) configured to detect said characteristics (Ci) which are representative of the device (20) connected to said kiosk.

4. The kiosk system according to anyone of the preceding claims wherein said kiosk manager (30) comprises a configuration manager (32) configured to configure said at least one kiosk (10) in said sub-network (1).

5. The kiosk system according to claim 4 wherein said configuration manager (32) comprises one or more of:
o a first configuration module (321) configured to create a kiosk (10a; 10c, 10d);
o a second configuration module (322) configured to modify physic infrastructures of said kiosk (10a; 10c, 10d);
o a third configuration module (323) configured to load and/or start a kiosk (10a; 10c, 10d);
o a fourth configuration module (324) configured to duplicate a kiosk (10a; 10c, 10d); and
o a fifth configuration module (325) configured to eliminate a kiosk (10a; 10c, 10d).

6. The kiosk system according to anyone of the preceding claims wherein said kiosk manager (30) comprises a service orchestrator manager (33) configured to design, specify and orchestrate the deployment of advanced services suitable on the virtual kiosks network, in order to dynamically distribute the computational resources into the virtual kiosk sub- network (1).

7. The kiosk system according to anyone of the preceding claims wherein said kiosk manager (30) comprises a help manager (34) configured to monitor for connectivity problems and to handle trouble tickets System.

8. The kiosk system according to anyone of the preceding claims wherein said kiosk manager (30) is configured to be distributed on one or more kiosks (10)

9. The kiosk system according to anyone of the preceding claims wherein said devices (20) comprise multimedia devices and/or sensors devices.

10. The kiosk system according to anyone of the preceding claims wherein said devices (20) are connected to said kiosks (10) by means of one or more of:
o a cable connection, and
o a wireless connection.

11. The kiosk system according to anyone of the preceding claims wherein said devices (20) comprise one or more among:
o Wireless access point;
o Cameras;
o interactive terminal;
o NFC device;
o Pressure and/or temperature sensors;
o multi-core Processing units;
o storage;
o localization;
o network connections (multilayer);
o display, possibly high resolution display.

12. The kiosk system according to anyone of the preceding claims wherein said kiosk (10) comprises an application layer (12) representing a set of functionalities exposed to a final user, provided by said physical device (20) represented by said characteristics (Ci).

13. A kiosk (10) connected to at least one device (20) in a network (100), the kiosk (10) comprising:
o an application layer (12) representing a set of functionalities exposed to a final user, provided by said device (20) represented by said characteristics (Ci);
o a virtual layer (11) comprising characteristics (Ci) which are representative of the device (20) connected thereto; and
o a network layer (13) configured for connecting the kiosk (10) to a computational grid, representing a platform sharing coordinated resource/devices (20), and a problem solving system in dynamic, multi-dimensional kiosks sub-network (1) as a function of said characteristics (Ci) which are representative of the device (20) connected to the kiosk (10).

## Amended claims

### Amended claims in accordance with Rule 137(2) EPC.

**1.** A kiosk system comprising:
o a first kiosk (10a) and a second kiosk (10c, 10d);
o a first device (20-1, 20-2) connected to said first kiosk (10a) and a second device (20-1, 20-3, 20-4; 20-1) connected to said second kiosk (10c, 10d);
o a kiosk manager (30) configured to manage said first and second kiosks (10a; 10c, 10d); and
o a network connection (100) between said kiosk manager (30) and
said first and second kiosks (10a; 10c, 10d),
wherein
o each of said first and second kiosks (10a; 10c, 10d) comprises a virtual layer (11) comprising information (Ci) which are representative of the device (20) connected thereto; and
o said kiosk manager (30) is configured to form a kiosk sub-network (1) by connecting said first and second kiosks (10) as a function of said representative information (Ci).

**2.** A kiosk system according to claim 1 wherein the kiosk manager (30) comprises:
o an interface layer (35) for the configuration of every single kiosk (10) and of the kiosks (10a; 10c, 10d) operating in the network;
o a service layer (36) for converting requests in the activation of services consistent with the features of each kiosks;
o a network layer (37) for converting kiosks configuration requests in suitable data packets for the management of every single kiosk (10a; 10c, 10d).

**3.** The kiosk system according to claim 1 wherein said kiosk manager (30) comprises a discovery manager (31) configured to detect said information (Ci) which are representative of the device (20) connected to said kiosk.

**4.** The kiosk system according to anyone of the preceding claims wherein said kiosk manager (30) comprises a configuration manager (32) configured to configure said at least one kiosk (10) in said sub-network (1).

**5.** The kiosk system according to claim 4 wherein said configuration manager (32) comprises one or more of:
o a first configuration module (321) configured to create a kiosk (10a; 10c, 10d);
o a second configuration module (322) configured to modify physic infrastructures of said kiosk (10a; 10c, 10d);
o a third configuration module (323) configured to load and/or start a kiosk (10a; 10c, 10d);
o a fourth configuration module (324) configured to duplicate a kiosk (10a; 10c, 10d); and
o a fifth configuration module (325) configured to eliminate a kiosk (10a; 10c, 10d).

**6.** The kiosk system according to anyone of the preceding claims wherein said kiosk manager (30) comprises a service orchestrator manager (33) configured to design, specify and orchestrate the deployment of advanced services suitable on the virtual kiosks network, in order to dynamically distribute the computational resources into the virtual kiosk sub- network (1).

**7.** The kiosk system according to anyone of the preceding claims wherein said kiosk manager (30) comprises a help manager (34) configured to monitor for connectivity problems and to handle trouble tickets System.

**8.** The kiosk system according to anyone of the preceding claims wherein said kiosk manager (30) is configured to be distributed on one or more kiosks (10)

**9.** The kiosk system according to anyone of the preceding claims wherein said devices (20) comprise multimedia devices and/or sensors devices.

**10.** The kiosk system according to anyone of the preceding claims wherein said devices (20) are connected to said kiosks (10) by means of one or more of:
o a cable connection, and
o a wireless connection.

**11.** The kiosk system according to anyone of the preceding claims wherein said devices (20) comprise one or more among:
o Wireless access point;
o Cameras;
o interactive terminal;
o NFC device;
o Pressure and/or temperature sensors;
o multi-core Processing units;
o storage;
o localization;
o network connections (multilayer);
o display.

**12.** The kiosk system according to anyone of the preceding claims wherein said kiosk (10) comprises an application layer (12) representing a set of functionalities exposed to a final user, provided by said physical device (20) represented by said information (Ci).
